# EUROPEAN PATENT SPECIFICATION

(11) **EP 1 580 171 B1**
(45) Date of publication and mention of the grant of the patent: **29.06.2011**
(21) Application number: 05251654.9
(22) Date of filing: 18.03.2005
(51) Int. Cl.: C03B 27/044

(54) **Tempering of glass**
Tempern von Glas
Trempe du verre

(30) Priority: 23.03.2004 GB 0406545
(43) Date of publication of application: 28.09.2005
(73) Proprietor: Pilkington Group Limited, St. Helens Merseyside WA10 3TT (GB); Pilkington Automotive Finland Oy, 33101 Tampere (FI)
(72) Inventor: Thomas, Brian James, Wigan Lancashire WN8 7TT (GB); Artama, Juha, 33101 Tampere (FI); Klemola, Jorma, 33101 Tampere (FI)
(74) Representative: Pettet, Nicholas Edward

(56) References cited:
- EP-A- 0 558 912
- EP-A- 1 279 645
- GB-A- 472 022
- US-A- 2 388 808
- US-A- 3 294 519
- US-A- 4 323 385
- US-A- 4 402 723
- US-A- 4 515 622
- US-A- 5 620 492
- PATENT ABSTRACTS OF JAPAN vol. 2003, no. 12, 5 December 2003 (2003-12-05) -& JP 2003 261344 A (NIPPON SHEET GLASS CO LTD), 16 September 2003 (2003-09-16)
- PATENT ABSTRACTS OF JAPAN vol. 2003, no. 06, 3 June 2003 (2003-06-03) -& JP 2003 040635 A (CENTRAL GLASS CO LTD), 13 February 2003 (2003-02-13)

## Description

The invention relates to a process for tempering large panes of glass for the production of vehicle glazing, large tempered panes for use in vehicle glazing and double glazed units for vehicle windows comprising two large opposed tempered panes.

In recent years, motor coaches have commonly been fitted with side glazings in the form of double glazed units i.e. glazing units comprising two opposed spaced panes secured together separated at their edges by a spacer which defines an air (or other gas) space between the panes. These units have been composed of 4 mm or 5 mm thick glass panes tempered to meet the requirements of the applicable standard for the relevant automotive glazings (in Europe, ECE R43).

ECE R43 provides that toughened safety glass used in vehicle glazing should, on fracture from specified locations, fracture such that the number of fragments in any 5 cm x 5 cm square (other than certain excluded areas) is in the range 40 to 400 (450 for glass not more than 3.5 mm thick). Fragments of area exceeding 3 sq. cm are not allowed; a few fragments of elongated shapes are allowed subject to certain conditions.

The 4 mm and 5 mm panes have typically been tempered using tempering equipment including vertically spaced opposing upper and lower quench boxes, the upper and lower boxes each comprising a first array of nozzles for supply of cooling air at relatively low pressure interspersed with a second array of nozzles for providing a blast of quench air at relatively high pressure. In a preferred form of the apparatus, the quench boxes are arranged above and below a conveyor which is adjustable between a flat (normally horizontal) position in which the rollers provide a flat bed for transportation of the glass and an arched position in which the conveyor is arched to a curvature corresponding to a curvature required in the glass. When the conveyor arches, a hot glass pane moving along the conveyor bends to conform to the curvature of the conveyor; when the pane has adopted the curvature of the conveyor, and with the quench boxes in position above and below the curved glass pane, air is supplied at relatively low pressure (typically 5 to 50 kPa) to the first arrays of nozzles while air at higher pressure (typically 1 to 5 bar) is supplied to the second arrays of nozzles to quench and cool the glass. The rollers may be arranged to reciprocate the glass pane within the quench zone during the tempering and cooling process.

The process and apparatus described above has proved adequate to bend and temper substantial glass panes (up to 2.5 square meters or more in area) of 4 mm or 5 mm glass to meet ECE R43. However, when attempts have been made to use the apparatus to temper large 3 mm glass panes to ECE R43, the tempering achieved has been inadequate such that, on fracture from a central location, the fractured glasses have exhibited fracture patterns which do not meet the standard set out above, in particular exhibit regions in which the particle count does not meet the minimum value of 40 specified in the standard.

USP 4,515,622 discloses an improved glass sheet quench of the type including opposed blastheads each of which includes elongated plenum housings which are spaced from each other and supply pressurised quenching gas to a heated glass sheet positioned between the blastheads. The improved quench has a construction which reduces the pressure build up of spent quenching gas between the blastheads.

USP 2,388,808 discloses a method of tempering glass wherein a more positive and accurate control of the air supply for cooling is obtained by feeding conditioned air to the blower heads.

USP 3,294,519 discloses apparatus for tempering glass sheets comprising nozzle boxes, wherein the wall of each nozzle box facing the central portion of the glass sheet undergoing quenching has a greater proportion per unit area apertured than the remainder of the wall facing the portion of the glass sheet surround its central portion.

EP 1 462 420 and JP 2003 261344 disclose methods for tempering thin glass sheets.

We have now found that large 3 mm glass panes can be satisfactorily tempered to ECE R43 while preserving satisfactory optics by increasing the flow of quench gas in the central area of the pane relative to the flow of quench gas in the lateral areas of the pane provided at least a proportion the quench gas flowing in the central area of the pane has been dried to avoid or at least alleviate condensation on the glass.

According to the present invention, there is provided a method of tempering a large thin glass pane for automotive use by quenching the glass pane between quench boxes on either side of the glass pane characterised by providing a higher quench gas flow in the central area of the pane than in the lateral areas, wherein at least a proportion of the quench gas flowing to the central area has been dried, and further wherein the quench gas supplied to the central area has a dew point below 8.5°C. The flow rate in the central area of the pane is preferably at least 50% higher than the flow rate in the lateral areas of the pane.

In a preferred embodiment of the invention, the quench boxes provide first arrays of nozzles connected to a low pressure gas source or sources and second arrays of nozzles connected to a high pressure gas source or sources and the flow of quenching gas from the high pressure nozzles of the second array in the central area of the pane is higher than the flow of quenching gas from the high pressure nozzles of the second array in the lateral areas of the pane.

Surprisingly, the use of increased quench gas flow in the central area only has been found to provide substantially uniform (at least sufficiently uniform to meet the requirements of ECE R43) tempering of the glass. In contrast, when the quench gas pressure - and hence flow - is simply increased over the whole area of the glass, we still encounter difficulty in achieving sufficient tempering in the central area of the glass. With the benefit of hindsight, this is attributed to inability of quench air to escape from the central area outwards. Unfortunately, use of increased quench gas flow in the central area of the pane is not, on its own, not sufficient to obtain consistent tempering to ECE R43 with satisfactory optics, and commercially acceptable yields have only been achieved when the high pressure quench gas supplied to the central area of the pane is dried. With the benefit of hindsight, it is believed that drying the high pressure air reduces the tendency of condensation to occur on quenching, such condensation being liable to cause breakage of the glass in the quench or "crizzling' of the glass surface (formation of a myriad of cracks on the surface).

The gas supplied to the low pressure nozzles is normally air provided by means of a fan and typically supplied to the nozzles at a pressure in the range 5 to 50 kPa, especially 5 to 20 kPa. The gas supply to the high pressure nozzles is normally compressed air and is typically applied to the nozzles at a pressure in the range 1 to 5 bars, especially 2.5 to 5 bars. When using high volumes of compressed air, there is a serious risk of moisture in the air condensing and resulting water droplets adversely affecting the tempering process. Thus, in operation of the present invention, it is normally preferred to dry the compressed air e.g. to a dew point of less than 8.5° C, especially less than 7°C and preferably less than 6° C (measured at the pressure of the compressed air).

Increased gas flow to the high pressure nozzles in the central area may be produced by using a higher gas pressure. However, we prefer to achieve it by providing high pressure nozzles of increased diameter in the central area of the glass. Thus the diameter of the high pressure nozzles in the central area may be at least 30% greater, and preferably at least 60% greater, than the diameter of the nozzles in the lateral areas.

By a "large" pane we mean a pane of area at least 1 square meter, although the invention is most useful for tempering of even larger panes e.g. panes of area over 1.5 square metres, especially over 2 square metres.

By a 'thin' pane we mean a pane of 3 mm thickness or less. Moreover, the skilled man will appreciate that the term "3 mm" is used to refer not only to glass which is exactly 3 mm thick, but to glass with a thickness of approximately 3 mm thickness, usually glass with a thickness in the range from 2.8 mm to 3.3 mm. The main advantage of using 3 mm glass, as opposed to 4 mm of 5 mm glass, is that the weight of the glazing can be reduced. It will be appreciated that this is especially important in large glazings, and especially when double glazed units are used.

Preferably, the quench gas flow in the central area of the pane is higher, not only than the flow in the lateral areas of the pane, but the flow in all the peripheral areas of the pane i.e, not only the lateral areas but also the areas in front and behind the central area. In this case, high pressure nozzles of increased diameter in the central area of the pane may be surrounded by high pressure nozzles of lower diameter in the peripheral areas.

To produce a double glazed unit for a motor coach, two tempered panes, each tempered to meet the requirements of the appropriate standard, are assembled together in spaced relation separated at their edges by a spacer frame which, together with the panes, defines an air (or other gas space) between the panes. Each of the panes may be of clear or coloured (especially body tinted) glass; increasingly, body tinted glass is preferred, both for aesthetic reasons and to reduce solar heat entering the vehicle. In conventional 4 mm or 5 mm double glazed units, either one or both panes may be tinted. In 3 mm double glazed units in accordance with the invention it is preferred (although by no means essential) that, when tinted glass is used for aesthetic and/or solar control purposes, the task is spread between the panes and two panes of intermediate tint are used, since we have found that tinted 3 mm panes are more readily tempered than clear 3 mm panes.

To operate the method of the present invention, a conventional quench apparatus provided with an array of like quench nozzles over the area of the quench may be modified by replacing quench nozzles in the central area of the quench by quench nozzles of larger diameter.

The tempering method of the invention may be carried out using a form of the glass bending and tempering apparatus described and illustrated in US patent 5 057 137 with quench boxes modified in accordance with the present invention as hereinafter described. In the accompanying drawings.
Figure 1 is a schematic diagram showing the general layout of the apparatus.
Figure 2 is a schematic side view of the bending and tempering station before a glass to be processed enters the station.
Figure 3 is a schematic side view of the bending and tempering station, similar to Figure 2, during a bending and tempering operation.
Figure 4 is a fragmentary perspective view, from one side and below, of some of the stub rolls and quench boxes constituting the upper section of the bending and tempering station of Figures 2 and 3.
Figure 5 is a fragmentary perspective view, from one side and above, of some of the rollers and quench boxes constituting the lower section of the bending and tempering station of Figures 2 and 3, in its flat position (Figure 2).
Figure 6 is a partial cross section through a quench box as used in the apparatus of Figure 2 and 3.
Figure 7 is a schematic plan view showing the areas of the apparatus of Figures 2 and 3 in which quench nozzles of differing diameter are used.
Figure 8 is a schematic plan view of a tempered pane in accordance with the invention showing measured compressive surface stress at different locations on the surface of the pane.

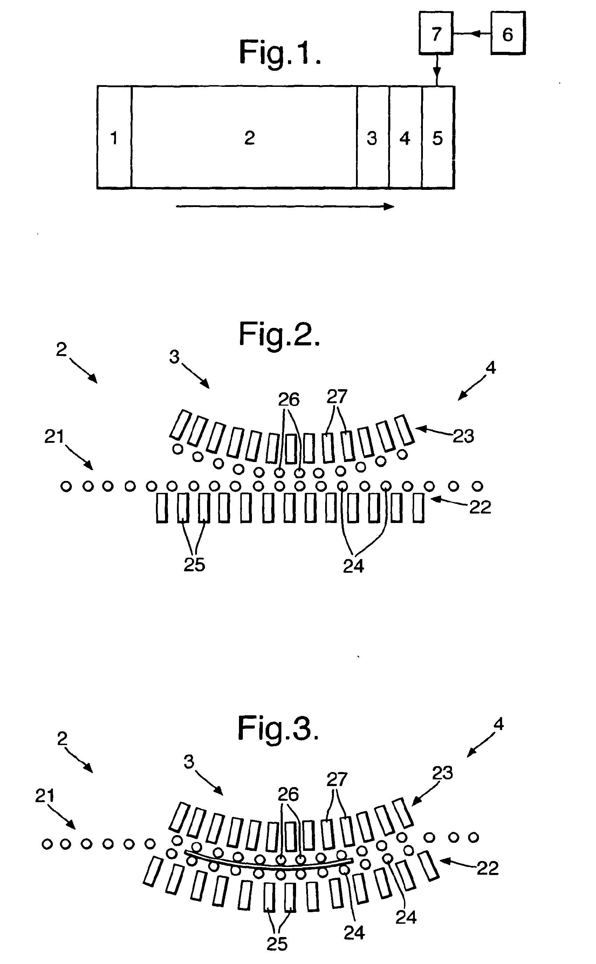

Referring to Figure 1 of the drawings, a glass pane prepared for bending and tempering is loaded into the loading station 1 of the apparatus and moves through the apparatus on a series of conveyors in the direction indicated by the arrow. It is advanced through a heating station or furnace 2 to bending and tempering station 3 where the glass is first bent, and then tempered in accordance with the method of the invention. After tempering, the glass is advanced through cooling station 4 where it is cooled before being advanced to unloading station 5 for unloading. A drier 7 is provided to dry high pressure quench gas supplied to the tempering station from compressor 6.

Referring to Figures 2 and 3, a series of driven conveyor rollers 21 serve to advance a hot glass from furnace 2 into bending and tempering station 3. Bending and tempering station 3 comprises a lower conveying, bending and quench section 22, and an upper bending and quench section 23.

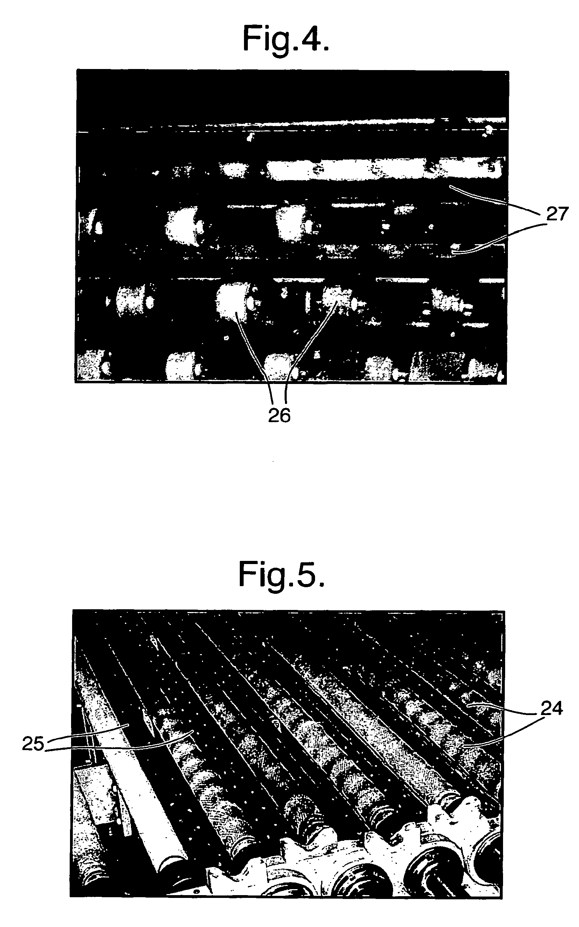

Lower conveying, bending and quench section 22 comprises conveying and bending rollers 24 and quench boxes 25. Rollers 24 are reversibly driven to advance the glass through the bending and quench station, and oscillate the glass within that station. Quench boxes 25 are provided with quench nozzles connected to supplies of quench air as described in more detail below. The rollers 24 and quench boxes 25 are together adjustable between a generally flat, normally horizontal configuration (as shown in Figure 2) in which the rollers provide a flat bed for transportation of a glass pane, and an arched configuration (Figure 3) in which the conveyor is arched, concave surface up, to a curvature required in the glass. The upper surfaces of some of the rollers 24 and quench boxes 25 in the flat configuration of Figure 2 are shown in the photograph of Figure 5 in perspective view from the side and above. The distribution of quench boxes 25 and quench nozzles as shown in Figure 5 is substantially uniform over the whole area of the bending and tempering station, and the quench boxes are arranged so that, when the roller bed arches, the arrangement of quench boxes also arches with the quench boxes remaining substantially equidistant from the surface of a glass pane supported on the rollers 24.

Upper bending and quench section 23 comprises a uniform array of non-driven stub rolls 26, mounted between quench boxes 27, as shown in Figures 2, 3 and 4. The array of quench boxes 27 corresponds to the array of quench boxes 25 in lower section 22, and the distribution of quench nozzles is similar. Although the upper bending and quench section of the apparatus may be adjustable between flat and arched configurations, with the distances between the nozzle boxes and the path of the glass, as defined by the surface of stub rolls 26 remaining substantially constant and uniform over the area of the bending and quenching station, we normally prefer to operate with the upper section 23 fixed in a configuration arched to the curvature required in the glass.

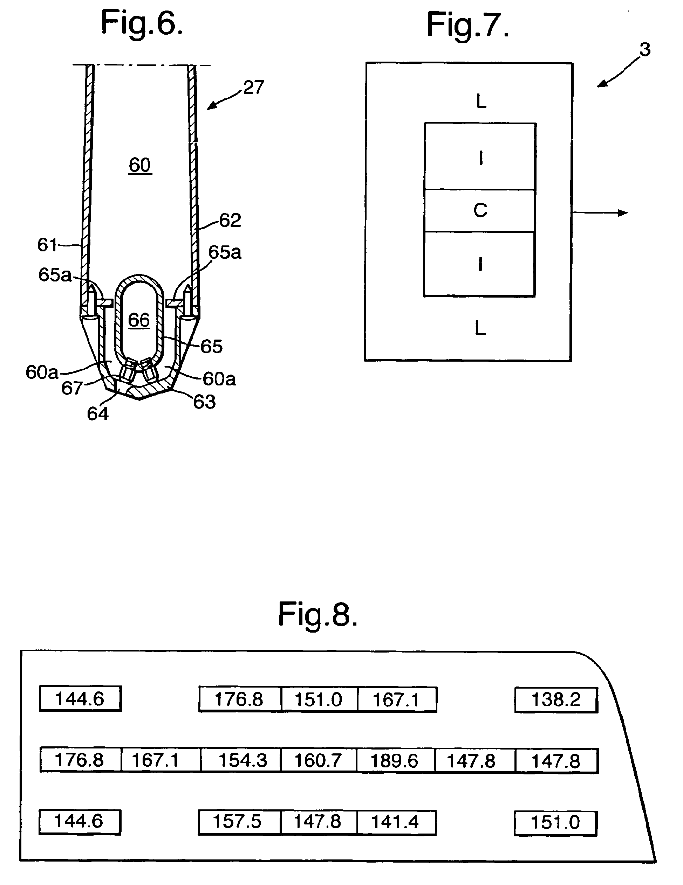

As can be seen from Figures 4 and 5, each of the quench boxes in both upper and lower arrays has two staggered rows of nozzles extending across the width of the quench area, the first row of nozzles in each quench box being aligned with the first row of nozzles in the next quench box. Figure 6 is a side section through an upper quench box 27 through the position of a nozzle. The lower quench boxes are similar.

Referring to Figure 6, a quench box 27 includes opposed side walls 61 and 62 with a cover 63 provided with a series of openings or nozzles 64. These openings or nozzles are the nozzles seen in Figure 4 of the drawings. Within each quench box 27 a flattened tube 65 defining a duct or air space 66 is mounted between opposed spaced plates 65a and extends along the length of the quench box. Tube 65 is provided with screw-in nozzles 67 opening into the quench box in alignment with openings or nozzles 64, one nozzle 67 being provided for each nozzle or opening 64.

Thus each quench box 25 and 27 provides two ducts 60 and 66 extending across the width of the tempering zone for independent supply of two quench gases. Quench box cover 63 defines a gas space 60a which is in communication with duct 60 through spaces between spaced plates 65a carrying tube 65. In use, duct 60 is interruptedly connected to a source of low pressure quench gas (normally air, known in the art as "fan air"), typically at a pressure in the range 5 to 50 kPa. Tube 65 defines a duct 66 which, in use, is interruptedly connected to a source of compressed gas, normally air, typically at a pressure in the range 1 to 5 bar; the air may be compressed using for example, a screw compressor and is dried to a dew point below 10° C (measured at the pressure of the compressed air); the compressed air may be dried using a commercially available drier after compression.

In use, the ducts 60 of each quench box 27 in the upper array and the corresponding ducts of each quench box 25 in the lower array are connected to a common source of low pressure quench air, so that the pressure of low pressure air applied to nozzles 64 is substantially uniform over the area of the bending and tempering station. Similarly, the ducts 66 of each quench box 27 in the upper array and the corresponding ducts of each quench box in the lower array are connected to a common source of compressed air so that the pressure of the air applied to nozzles 67 is substantially uniform over the area of the bending and tempering station.

In use, a glass pane to be bent and tempered for production of a vehicle window is cut to size and edge worked in conventional manner and loaded onto the loading station 1 of the bending and tempering apparatus with the height of the window parallel to the direction of glass advance through the apparatus. The glass is heated in the furnace 2 and advanced from furnace 2 over conveyor rollers 21 into bending and tempering station 3 with the lower section 22 in the flat configuration shown in Figure 2 of the drawings. When the trailing edge of the glass pane enters the bending and tempering station 3, the lower section arches to the configuration shown in Figure 3 and the glass bends under gravity. Upper section 23 of the bending and tempering station is lowered until stub rolls 26 bear on the upper surface of the glass spacing upper quench boxes 27 from the glass surface. Before the leading edge of the glass reaches the downstream edge of the bending and tempering station, the drive to rollers 24 is reversed and the bent glass oscillated, typically through a distance of around 500 mm, back and forth. Compressed air at high pressure is applied through ducts 66 and relatively low pressure fan air is applied through ducts 60 after bending is complete but usually (in the interest of a short cycle time and hence high efficiency) before oscillation of the glass begins, typically when the glass still has about 100 mm to travel before oscillation begins.

Using the process and apparatus as described above to bend and temper large 3 mm glass panes without modification has not produced adequate tempering to meet the requirements of ECE R43. Increasing the pressure of quench air, either or both the fan air and the compressed air, has not solved the problem. We have found, however, that the problem may be solved by preferentially increasing the flow of quench air in the central area of the pane relative to the flow in the lateral areas. This may conveniently be done by providing high pressure nozzles of increased diameter in the central area of the glass.

Figure 7 is a diagrammatic plan view of the bending and tempering station, with the arrow indicating the direction of advance of glass through the bending and tempering station 3 from the furnace 2 to the cooling station 4.

In a preferred embodiment of the invention, nozzles 67 of internal diameter 1.25 mm are used around the periphery of bending and tempering station 3, including in the lateral areas L. In the central area C, nozzles 67 of internal diameter 2.25 mm are used. In intermediate areas I nozzles 67 the same diameters as in the central area C, or of intermediate internal diameter 2 mm are used. We have found that, using such nozzle arrays (in both upper and lower quench boxes), it is possible to temper large 3 mm glass panes (up to at least 2.2m x 1.15m) to ECE R43 while preserving satisfactory optics.

With the benefit of hindsight, it is surmised that increasing the quench gas flow preferentially in the central area of the pane enables ECE R43 to be met for large thin glass panes, while increasing the gas pressure (and hence gas flow) uniformly over the whole area of the bending and quenching station is less effective because, using the former arrangement, gas from the central area is able to escape towards the lateral areas (whereas, if the flow is also increased in the lateral areas, quench gas from the central area is less able to escape and flow of quench gas in the central area is consequently reduced).

While satisfactory results may be achieved using the nozzle layout described, we have noted a tendency for a high number of particles to be formed towards the leading and trailing edges of the pane on fracture. To alleviate this tendency (and further assist escape of quench gas from the central area of the quench) reduced gas flow e.g. reduced high pressure nozzle sizes, may be used towards the front and back of the quench, especially towards the centre line.

In a specific example, a pane of 3.15 mm clear float glass was cut to a size of approximately 1675 mm x 1000 mm for production of a coach side window and loaded onto the loading station 1 of the apparatus described above, with the differentially sized screw-in nozzles 67 described with reference to Figure 7 above in position.

The glass was advanced through furnace 2 where it reached a temperature of 690°C on exit to the bending and tempering station 3 where it was advanced at a rate of 250 mm/second with the lower section of the station 3 flat as shown in Figures 2 of the drawings. When the trailing edge of the glass entered bending and tempering station 3, the lower section was arched over a period of 0.5 seconds, the glass bending under gravity to conform to the curvature defined by the arched configuration of the lower section. With the lower section 22 remaining in the arched configuration, upper section 23 of the bending and tempering station was lowered until stub rolls 26 bore on the upper surface of the glass spacing upper quench boxes 27 from the glass surface.

Compressed air, dried to a dew point less than 7°C, was then applied to high pressure nozzles 67 through ducts 66; the compressed air was applied to the high pressure nozzles 67 of the quench boxes 24 of lower section 22 at a pressure of 3.7 atmospheres, and to the high pressure nozzles 67 of the quench boxes 27 of upper section 23 at a pressure of 3.9 atmospheres. Fan air was applied to quench boxes 24 of lower section 22 and quench boxes 27 of upper section 23 at a pressure of 13kPa. When the glass had about 100 mm to travel within the bending station, the drive to conveying rollers 24 was reversed and the bent glass oscillated over a distance of 500 mm within bending and tempering station 3 until the quench was complete (6 seconds) and the glass was sufficiently cool to be conveyed out of the bending and tempering station to cooling station 4 and thence to an unloading station 5.

Panes bent and tempered as described above were tested for compliance with ECE R43 and found to comply, with the fracture patterns on fracture from both the centre and corner of the panes meeting the requirements of the standard.

When the procedure was repeated, using compressed air at a dew point of 12°C in place of the dried air, there was instances of breakage in the quench and crizzling of the glass surface rendering the process unreliable.

When the practice was repeated, again using compressed air dried to a dew point of less than 7°C, but with the differential nozzles of central area C and intermediate area I replaced by the standard 1.24 mm nozzles as used in the lateral areas L of the bending and quenching station, the breakage and crizzling referred to above were avoided. However, the glass did not consistently pass the ECE R43 fracture test, due to the presence of excessive long splinters in the central area of the pane. It was found that the long splinters could be avoided by increasing the pressure of the high pressure quench air. However, in this case, the products failed ECE R43 because the particle count on fracture exceeded the 450 limit in certain areas of the pane. Only by using dry high pressure quench gas (air), with a higher quench gas flow in the central area than in the lateral areas, was it found possible to consistently meet the requirements of ECE R43.

The surface compressive stress of a 3 mm glass pane tempered in accordance with the invention was measured at a series of locations over the surface of the glass. The measurement positions, and the measured values in MPa, are shown in Figure 8 of the drawings.

For fracture of 3 mm glass in accordance with ECE R43, it would be anticipated that a central tensile stress of around 60 MPa, corresponding to a surface compressive stress of around 120 MPa, would be appropriate; significantly higher tensile stresses would be expected to lead to too many small particles being formed on fracture, and the limit of a maximum of 450 particles per 5 cm x 5 cm square being exceeded. Surprisingly, our measurements of surface compressivc stress show values, over most of the surface of the glass, over 140 MPa, indicating that a higher degree of tempering (as determine by measurements of surface compressive stress) is required to meet ECE R43, and can be utilised without exceeding the upper limit of 450 particles per 5 cam x 5 cm square on fracture.

According to the present invention, there is provided a large tempered glass pane with a thickness of approximately 3mm, meeting the requirements of ECE R34 for a uniformly tempered glass pane, said pane being tempered to a surface compressive stress of over 140 MPa over most of the area of the pane. Preferably, the pane is tempered to a surface compressive stress in the range 140 MPa to 180 MPa, over most of the area of the pane. Preferably the surface compressive stress conforms to the above criteria over 80% of the area, most preferably 90% of the area, of the pane.

The tempered glass pane may be an automotive window. In a preferred embodiment of the invention the automotive window is a double glazed unit comprising two large thin tempered glass panes, each in accordance with the invention, secured together separated at their edges by a spacer frame thereby defining a gas space between the panes.

While the method of the invention has been described above with reference to the production of curved, and specifically cylindrically curved glazings, for which it is most useful, it will recognised that it may equally be used, with appropriate modification, for the production of large flat thin automotive glazings.

## Claims

1. A method of tempering a large 3 mm glass pane for automotive use that meets the requirements of ECE R43 by quenching the glass pane between quench boxes (25, 27) on either side of the glass pane **characterised by** using a higher quench gas flow in the central area of the pane than in the lateral areas, wherein at least a proportion of the quench gas supplied to the central area has been dried and further wherein the quench gas supplied to the central area has a dew point below 8.5°C.

2. A method as claimed in claim 1 wherein the dried quench gas has a dew point below 7° C.

3. A method as claimed in either of claims 1 or 2, wherein the quench gas flow rate in the central area of the pane is at least 50% higher than the flow rate in the lateral areas of the pane.

4. A method as claimed in any of the preceding claims wherein the quench boxes (25, 27) provide first arrays of nozzles (64) connected to a low pressure gas source or sources and second arrays of nozzles (67) connected to a high pressure gas source or sources and the flow of quenching gas from the high pressure nozzles of the second array in the central area of the pane is higher than the flow of quenching gas from the high pressure nozzles of the second array in the lateral areas of the pane.

5. A method as claimed in claim 4 wherein quench gas at a pressure in the range 5 to 50kPa is supplied to the low pressure nozzles.

6. A method as claimed in claim 4 or claim 5 wherein quench gas at a pressure in the range 1 to 5 bars is supplied to the high pressure nozzles.

7. A method as claimed in claim 6 wherein quench gas at a pressure in the range 2.5 to 5 bars is supplied to the high pressure nozzles.

8. A method as claimed in any of the claims 4 to 7, wherein the diameter of the high pressure nozzles in the central area of the pane is greater than the diameter of the high pressure nozzles in the lateral areas of the pane.

9. A method as claimed in claim 8 wherein the diameter of the high pressure nozzles in the central area of the pane is at least 30% greater than the diameter of the high pressure nozzles in the lateral areas of the pane.

10. A method as claimed in claim 8 wherein the diameter of the high pressure nozzles in the central area of the pane is at least 60% greater than the diameter of the high pressure nozzles in the lateral areas of the pane.

11. A method as claimed in any of claims 8 to 10 wherein high pressure nozzles of intermediate diameter are used in areas intermediate between the central area and the lateral areas.

12. A large tempered glass pane with a thickness of approximately 3mm, meeting the requirements of ECE R43 for a uniformly tempered glass pane, said pane being tempered to a surface compressive stress of over 140 MPa over most of the area of the pane.

13. A large tempered glass pane as claimed in claim 12 tempered to a surface compressive stress in the range 140 MPa to 180 MPa over most of the area of the pane.

14. A large tempered glass pane as claimed in claim 13 tempered to a surface compressive stress in the range 140 MPa to 180 MPa over more than 90% of the area of the pane.

15. A large tempered glass pane as claimed in any of the claims 12 to 14, having a thickness in the range from 2.8mm to 3.3mm

16. A large tempered glass pane as claimed in any of claims 12 to 15 being an automotive window.

17. An automotive window being a double glazed unit comprising two large tempered panes, each being a pane as claimed in any of claims 12 to 16, secured together separated at their edges by a spacer thereby defining a gas space between the panes.

## Patentansprüche

1. Verfahren zum Tempern einer großen, 3 mm dicken Glasscheibe zur Verwendung für Kraftfahrzeuge, welche die Erfordernisse der ECE-Regelung R43 erfüllt, durch Abschrecken der Glasscheibe zwischen Abschreckkästen (25, 27) auf jeder Seite der Glasscheibe,
**gekennzeichnet durch** Anwendung eines höheren Durchsatzes an Abschreckgas im zentralen Bereich der Scheibe als in den seitlichen Bereichen, wobei zumindest ein Teil des zum zentralen Bereich zugeführten Abschreckgases getrocknet wurde und wobei ferner das zum zentralen Bereich zugeführte Abschreckgas einen Taupunkt unter 8,5 °C besitzt.

2. Verfahren nach Anspruch 1, bei dem das getrocknete Abschreckgas einen Taupunkt unter 7 °C besitzt.

3. Verfahren nach Anspruch 1 oder 2, bei dem der Durchsatz an Abschreckgas im zentralen Bereich der Scheibe mindestens 50 % höher ist als der Durchsatz in den seitlichen Bereichen der Scheibe.

4. Verfahren nach einem der vorhergehenden Ansprüche, bei dem die Abschreckkästen (25, 27) erste Anordnungen von Düsen (64), die mit einer Quelle oder Quellen für Gas von niedrigem Druck verbunden sind, und zweite Anordnungen von Düsen (67) aufweist, die mit einer Quelle oder Quellen für Gas von hohem Druck verbunden sind, und der Durchsatz an Abschreckgas von den Hochdruckdüsen der zweiten Anordnung im zentralen Bereich der Scheibe höher ist als der Durchsatz an Abschreckgas von den Hochdruckdüsen der zweiten Anordnung in den seitlichen Bereichen der Scheibe.

5. Verfahren nach Anspruch 4, bei dem Abschreckgas bei einem Druck im Bereich von 5 bis 50 kPa den Niederdruckdüsen zugeführt wird.

6. Verfahren nach Anspruch 4 oder Anspruch 5, bei dem Abschreckgas bei einem Druck im Bereich von 1 bis 5 bar den Hochdruckdüsen zugeführt wird.

7. Verfahren nach Anspruch 6, bei dem Abschreckgas bei einem Druck im Bereich von 2,5 bis 5 bar den Hochdruckdüsen zugeführt wird.

8. Verfahren nach einem der Ansprüche 4 bis 7, bei dem der Durchmesser der Hochdruckdüsen im zentralen Bereich der Scheibe größer ist als der Durchmesser der Hochdruckdüsen in den seitlichen Bereichen der Scheibe.

9. Verfahren nach Anspruch 8, bei dem der Durchmesser der Hochdruckdüsen im zentralen Bereich der Scheibe mindestens 30 % größer ist als der Durchmesser der Hochdruckdüsen in den seitlichen Bereichen der Scheibe.

10. Verfahren nach Anspruch 8, bei dem der Durchmesser der Hochdruckdüsen im zentralen Bereich der Scheibe mindestens 60 % größer ist als der Durchmesser der Hochdruckdüsen in den seitlichen Bereichen der Scheibe.

11. Verfahren nach einem der Ansprüche 8 bis 10, bei dem in Zwischenbereichen zwischen dem zentralen Bereich und den seitlichen Bereichen Hochdruckdüsen mit einem Zwischendurchmesser verwendet werden.

12. Große getemperte Glasscheibe mit einer Dicke von ungefähr 3 mm, welche die Erfordernisse der ECE-Regelung R43 für eine gleichmäßig getemperte Glasscheibe erfüllt, wobei die Scheibe über den größten Teil der Fläche der Scheibe auf eine Oberflächen-Druckspannung von mehr als 140 MPa getempert ist.

13. Große getemperte Glasscheibe nach Anspruch 12, die über den größten Teil der Fläche der Scheibe auf eine Oberflächen-Druckspannung im Bereich von 140 MPa bis 180 MPa getempert ist.

14. Große getemperte Glasscheibe nach Anspruch 13, die über mehr als 90 % der Fläche der Scheibe auf eine Oberflächen-Druckspannung im Bereich von 140 MPa bis 180 MPa getempert ist.

15. Große getemperte Glasscheibe nach einem der Ansprüche 12 bis 14, die eine Dicke im Bereich von 2,8 mm bis 3,3 mm besitzt.

16. Große getemperte Glasscheibe nach einem der Ansprüche 12 bis 15, bei der es sich um eine Kraftfahrzeugscheibe handelt.

17. Kraftfahrzeugscheibe, die eine doppelt verglaste Einheit darstellt, die zwei große getemperte Scheiben aufweist, bei denen es sich jeweils um eine Scheibe nach einem der Ansprüche 12 bis 16 handelt und die an ihren Rändern zusammengefügt und durch einen Abstandshalter getrennt sind, wodurch ein Gasraum zwischen den Scheiben vorgegeben ist.

## Revendications

1. Procédé de trempe d'une grande vitre en verre de 3 mm à utiliser pour un véhicule automobile qui répond aux exigences de la norme ECE R43 par refroidissement rapide de la vitre en verre entre des caissons de trempe (25, 27) de part et d'autre de la vitre en verre, **caractérisé par** l'utilisation d'un écoulement de gaz de trempe plus élevé dans la zone centrale de la vitre que dans les zones latérales, dans lequel au moins une proportion du gaz de trempe alimenté à la zone centrale a été séché et dans lequel en outre le gaz de trempe alimenté à la zone centrale a un point de rosée inférieur à 8,5°C.

2. Procédé tel que revendiqué dans la revendication 1, dans lequel le gaz de trempe séché a un point de rosée inférieur à 7°C.

3. Procédé tel que revendiqué dans l'une ou l'autre des revendications 1 ou 2, dans lequel le débit du gaz de trempe dans la zone centrale de la vitre est d'au moins 50 % plus élevé que le débit dans les zones latérales de la vitre.

4. Procédé tel que revendiqué dans l'une des revendications précédentes, dans lequel les caissons de trempe (25, 27) fournissent des premiers réseaux de buses (64) reliés à une source ou à des sources de gaz à basse pression et des deuxièmes réseaux de buses (67) reliés à une source ou des sources de gaz à haute pression et l'écoulement du gaz de trempe provenant des buses à haute pression du deuxième réseau dans la zone centrale de la vitre est plus élevé que l'écoulement du gaz de trempe provenant des buses à haute pression du deuxième réseau dans les zones latérales de la vitre.

5. Procédé tel que revendiqué dans la revendication 4, dans lequel du gaz de trempe à une pression dans la plage de 5 à 50 kPa est alimenté aux buses à basse pression.

6. Procédé tel que revendiqué dans la revendication 4 ou la revendication 5, dans lequel du gaz de trempe à une pression dans la plage de 1 à 5 bars est alimenté aux buses à haute pression.

7. Procédé tel que revendiqué dans la revendication 6, dans lequel du gaz de trempe à une pression dans la plage de 2,5 à 5 bars est alimenté aux buses à haute pression.

8. Procédé tel que revendiqué dans l'une des revendications 4 à 7, dans lequel le diamètre des buses à haute pression dans la zone centrale de la vitre est plus grand que le diamètre des buses à haute pression dans les zones latérales de la vitre.

9. Procédé tel que revendiqué dans la revendication 8, dans lequel le diamètre des buses à haute pression dans la zone centrale de la vitre est d'au moins 30 % plus élevé que le diamètre des buses à haute pression dans les zones latérales de la vitre.

10. Procédé tel que revendiqué dans la revendication 8, dans lequel le diamètre des buses à haute pression dans la zone centrale de la vitre est d'au moins 60 % plus élevé que le diamètre des buses à haute pression dans les zones latérales de la vitre.

11. Procédé tel que revendiqué dans l'une des revendications 8 à 10, dans lequel des buses à haute pression à diamètre intermédiaire sont utilisées dans les zones intermédiaires entre la zone centrale et les zones latérales.

12. Grande vitre en verre trempée d'une épaisseur d'environ 3 mm, répondant aux exigences de la norme ECE R43 pour une vitre en verre uniformément trempée, ladite vitre étant trempée à une contrainte en compression superficielle de plus de 140 MPa sur la majeure partie de la surface de la vitre.

13. Grande vitre en verre trempée telle que revendiquée dans la revendication 12, trempée à une contrainte en compression superficielle dans la plage de 140 MPa à 180 MPa sur la majeure partie de la surface de la vitre.

14. Grande vitre en verre trempée telle que revendiquée dans la revendication 13, trempée à une contrainte en compression superficielle dans la plage de 140 MPa à 180 MPa sur plus de 90 % de la surface de la vitre.

15. Grande vitre en verre trempée telle que revendiquée dans l'une des revendications 12 à 14, ayant une épaisseur allant de 2,8 mm à 3,3 mm.

16. Grande vitre en verre trempée telle que revendiquée dans l'une des revendications 12 à 15 qui est une fenêtre d'automobile.

17. Fenêtre d'automobile qui est une unité à double vitrage comprenant deux grandes vitres trempées, chacune étant une vitre telle que revendiquée dans l'une des revendications 12 à 16, rattachées l'une à l'autre et séparées à leurs bords par une entretoise définissant ainsi un espace gazeux entre les vitres.
